(19) Europäisches Patentamt / European Patent Office / Office européen des brevets

(11) **EP 3 385 784 B1**

(12) **FASCICULE DE BREVET EUROPEEN**

(45) Date de publication et mention de la délivrance du brevet: **11.01.2023 Bulletin 2023/02**

(51) Classification Internationale des Brevets (IPC): *G02F 1/35* (2006.01)    *G02F 1/365* (2006.01)

(21) Numéro de dépôt: **18161911.5**

(52) Classification Coopérative des Brevets (CPC): **G02F 1/395; G02F 1/3536; G02F 1/365;** G02F 1/392; G02F 2201/58; G02F 2203/15; G02F 2203/17; G02F 2203/56

(22) Date de dépôt: **15.03.2018**

(54) **DISPOSITIF OPTOELECTRONIQUE DE GENERATION D'UN PEIGNE DE FREQUENCES**

OPTOELEKTRONISCHE VORRICHTUNG ZUR ERZEUGUNG EINES FREQUENZKAMMS

OPTOELECTRONIC DEVICE FOR GENERATING A FREQUENCY COMB

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **17.03.2017 FR 1752226**

(43) Date de publication de la demande:
**10.10.2018 Bulletin 2018/41**

(73) Titulaire: **COMMISSARIAT À L'ÉNERGIE ATOMIQUE ET AUX ÉNERGIES ALTERNATIVES**
75015 Paris (FR)

(72) Inventeurs:
• SCIANCALEPORE, Corrado
  69002 LYON (FR)
• CASALE, Marco
  75005 PARIS (FR)
• EL DIRANI, Houssein
  38100 GRENOBLE (FR)

(74) Mandataire: **INNOV-GROUP**
310, avenue Berthelot
69372 Lyon Cedex 08 (FR)

(56) Documents cités:
US-A1- 2016 011 489

• MOHAMMAD SOLTANI ET AL: "Enabling arbitrary wavelength frequency combs on chip : Enabling arbitrary wavelength frequency combs on chip", LASER & PHOTONICS REVIEWS, vol. 10, no. 1, 17 décembre 2015 (2015-12-17), pages 158-162, XP055440273, DE ISSN: 1863-8880, DOI: 10.1002/lpor.201500226

• HOJOONG JUNG ET AL: "Electrical tuning and switching of an optical frequency comb generated in aluminum nitride microring resonators", OPTICS LETTERS, OPTICAL SOCIETY OF AMERICA, vol. 39, no. 1, 1 janvier 2014 (2014-01-01), pages 84-87, XP001587372, ISSN: 0146-9592, DOI: 10.1364/OL.39.000084 [extrait le 2013-12-20]

• G. T. REED ET AL: "Silicon optical modulators", NATURE PHOTONICS, vol. 4, no. 8, 12 août 2010 (2010-08-12), pages 518-526, XP055334361, UK ISSN: 1749-4885, DOI: 10.1038/nphoton.2010.179

• XIAOXIAO XUE ET AL: "Thermal tuning of Kerr frequency combs in silicon nitride microring resonators", OPTICS EXPRESS, vol. 24, no. 1, 11 janvier 2016 (2016-01-11), page 687, XP055440304, ISSN: 2161-2072, DOI: 10.1364/OE.24.000687

• STEVEN A. MILLER ET AL: "Tunable frequency combs based on dual microring resonators", OPTICS EXPRESS, vol. 23, no. 16, 7 août 2015 (2015-08-07), page 21527, XP055410219, DOI: 10.1364/OE.23.021527

• XUEZHI ZHANG ET AL: "Mid-infrared frequency comb generation in coupled silicon microring resonators", OPTICS COMMUNICATIONS, vol. 332, 1 décembre 2014 (2014-12-01), pages 125-131, XP055440192, AMSTERDAM, NL ISSN: 0030-4018, DOI: 10.1016/j.optcom.2014.06.058

• T. HERR ET AL: "Temporal solitons in optical microresonators", NATURE PHOTONICS, vol. 8, no. 2, 22 décembre 2013 (2013-12-22), pages 145-152, XP055438896, UK ISSN: 1749-4885, DOI: 10.1038/nphoton.2013.343

**Description**

## DOMAINE TECHNIQUE

Le domaine de l'invention est celui des dispositifs optoélectroniques de génération d'un peigne de fréquences quasi-cohérent ou cohérent par la formation de solitons temporels dissipatifs de type Kerr.

## ÉTAT DE LA TECHNIQUE ANTÉRIEURE

Des dispositifs optoélectroniques existent qui permettent de générer des peignes de fréquences. Un peigne de fréquences est une représentation d'un signal optique dans le domaine fréquentiel dont le spectre est composé d'une somme discrète de fréquences. L'amplitude peut être pondérée par une enveloppe spectrale centrée autour de la fréquence $w_p$ d'un signal de pompe. De tels dispositifs optoélectroniques trouvent leur application notamment dans le domaine de la télécommunication optique, par exemple les réseaux de transmission cohérente de données, de la génération de signaux, de la spectroscopie rapide, voire des systèmes de référence temporelle.

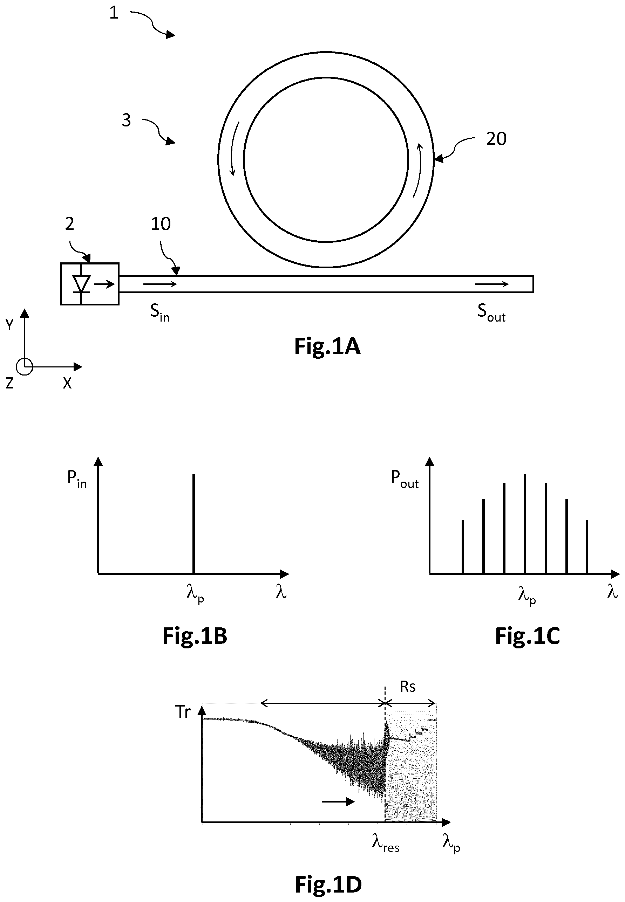

La figure 1A illustre un exemple d'un tel dispositif optoélectronique 1, décrit dans la publication de Levy et al. intitulée CMOS-compatible multiple-wavelength oscillator for on-chip optical interconnects, Nature Photon. 4, 37-40 (2010), ce dispositif optoélectronique 1 étant réalisé par des procédés de la microélectronique de type CMOS. Il comporte une source laser 2 et un micro-résonateur optique 3 en anneau. La source laser 2 est adaptée à émettre un signal optique $S_{in}$ dit de pompe, continu et monochromatique de longueur d'onde $\lambda_p$. Le micro-résonateur 3 comporte un guide d'onde de couplage 10 ayant une entrée couplée à la source laser 2 et une sortie qui fournit un signal optique $S_{out}$ dont le spectre forme le peigne de fréquences généré. Il comporte en outre une cavité optique formée d'un guide d'onde 20 en anneau, dit anneau résonant, réalisé en un matériau à propriétés optiques non linéaires du troisième ordre, ici du nitrure de silicium SiN.

Le micro-résonateur optique 3 forme un oscillateur paramétrique optique. Le signal de pompe $S_{in}$, dont le spectre est représenté sur la figure 1B, se couple de manière résonante par onde évanescente à un mode fondamental de l'anneau résonant 20. Dans la mesure où le matériau de l'anneau résonant 20 est optiquement non linéaire d'ordre trois, c'est-à-dire qu'il possède une susceptibilité électrique d'ordre trois, un phénomène dit de mélange à quatre ondes en cascade apparaît qui génère, à partir du mode fondamental supporté par l'anneau résonant 20, un peigne de fréquences dont un exemple est représenté sur la figure 1C. Par ailleurs, dans la mesure où un tel micro-résonateur optique 3 présente un facteur de qualité Q élevé, il n'est pas nécessaire que la puissance du signal de pompe soit grande pour que le gain paramétrique soit supérieur aux pertes optiques présentes dans l'anneau résonant 20, ce qui permet d'initier l'amplification des ondes générées.

La publication de Herr et al. intitulée Temporal solitons in optical microresonators, Nature Photon. 8, 145-152 (2014), décrit un autre exemple d'un dispositif optoélectronique permettant de générer un peigne de fréquences par mélange à quatre ondes cascadé, dans lequel l'anneau résonant est réalisé en un matériau à effet Kerr optique, plus précisément en $MgF_2$, et présente un régime de dispersion anormale à la longueur d'onde de pompe $\lambda_p$. Du fait de la dispersion anormale et des propriétés non linéaires du troisième ordre du matériau de l'anneau résonant, un ou plusieurs solitons temporels dissipatifs dits de Kerr peuvent être formés, qui rendent quasi-cohérent ou cohérent le peigne de fréquences généré.

Cependant, comme l'explique Herr 2014, les effets optiques non-linéaires du matériau de l'anneau résonant provoquent un décalage de la longueur d'onde de résonance $\lambda_{res}$ vers les grandes longueurs d'onde. De plus, le balayage en fréquence de la résonance montre que cette dernière présente une forme non plus lorentzienne mais de type triangulaire, dont un exemple est représenté sur la figure 1D.

Herr 2014 montre qu'il est possible de former des solitons temporels dissipatifs, qui rendent quasi-cohérent ou cohérent le peigne de fréquences généré, en réalisant un balayage de la résonance par la fréquence de pompe. En effet, lors du balayage en fréquence, le laser de pompe passe d'un accord spectral à la cavité optique dans le bleu (*blue-detuning*, en anglais) pour lequel la fréquence de pompe $w_p$ est supérieure à la fréquence de résonance effective $w_{res}$, à un accord spectral dans le rouge (*red-detuning*, en anglais) pour lequel la fréquence de pompe $w_p$ est inférieure à la fréquence de résonance effective $w_{res}$, qui entraîne alors la formation de solitons temporels. La présence des solitons peut être mise en évidence notamment à partir de la valeur Tr du signal de transmission optique qui présente, en régime de *red-detuning*, des transitions discrètes à mesure que la fréquence de pompe $w_p$ diminue, ces transitions traduisant la diminution du nombre de solitons se propageant dans la cavité optique. Le peigne de fréquences en régime solitonique présente également un bruit fortement diminué, et son enveloppe spectrale devient de type $\sinh^2$ lorsque le peigne est pleinement cohérent (un unique soliton dans la cavité optique).

Le dispositif optoélectronique de génération d'un peigne de fréquences quasi-cohérent ou cohérent décrit par Herr 2014 présente cependant l'inconvénient d'avoir à réaliser un accord spectral particulièrement fin du signal de pompe au mode résonant pour obtenir le régime solitonique Rs, ce qui nécessite l'utilisation d'une source laser coûteuse, encombrante et donc difficilement intégrable.

L'article de Soltani et al. intitulé Enabling arbitrary wavelength frequency combs on chip Laser Photonics Rev. 10, No. 1, 158-162 (2016) décrit la génération d'un peigne de fréquences au moyen de deux anneaux résonants couplés l'un à l'autre. Ces deux anneaux résonants sont couplés optiquement de manière à obtenir ensemble un régime de dispersion anormale (*anomalous GVD*), alors que chaque anneau résonant présente un régime de dispersion normal (*normal GVD).*

L'article de Jung et al. intitulé Electrical tuning and switching of an optical frequency comb generated in aluminum nitride microring resonators Optics Letters, Vol.39, No.1, 84-87 (2014) porte sur la commutation on/off d'un peigne de fréquences généré par un anneau résonant en AlN. Pour cela, les effets Kerr et Pockels de l'AlN sont mis à profit.

L'article de Xue et al. intitulé Thermal tuning of Kerr frequency combs in silicon nitride microring resonators, Optics Express, Vol.24, No.1, 687-698 (2016) porte sur les effets thermo-optiques présents lors de la génération d'un peigne de fréquences.

L'article de Zhang et al. intitulé Mid-infrared frequency comb generation in coupled silicon microring resonators, Optics Communications 332, 125-131 (2014) porte sur la génération d'un peigne de fréquences au moyen de deux anneaux résonants.

## EXPOSÉ DE L'INVENTION

L'invention a pour objectif de remédier au moins en partie aux inconvénients de l'art antérieur, et plus particulièrement de proposer un dispositif optoélectronique de génération d'un peigne de fréquences permettant un accord spectral simplifié entre le signal de pompe et un mode résonant dans le but de former des solitons temporels dissipatifs.

Pour cela, l'objet de l'invention est un dispositif optoélectronique de génération d'un peigne de fréquences comportant : une source laser adaptée à émettre un signal optique dit de pompe, continu et monochromatique d'une longueur d'onde de pompe constante dans le temps ; et un micro-résonateur optique en anneau, comportant :

    ◦ un guide d'onde dit de couplage, comportant une entrée optiquement couplée à la source laser, et une sortie destinée à fournir le peigne de fréquences généré ;
    ◦ un premier guide d'onde en anneau, dit anneau résonant, couplé optiquement au guide d'onde de couplage pour générer un mode optique dans l'anneau résonant à une longueur d'onde de résonance, et formé en un matériau optiquement non linéaire d'ordre trois qui présente un indice de réfraction et des dimensions transversales tels que l'anneau résonant présente un régime de dispersion anormale associé audit mode optique.

Le dispositif optoélectronique comporte en outre un dispositif d'accord spectral adapté à accorder la longueur d'onde de résonance par rapport à la longueur d'onde de pompe pour former au moins un soliton temporel dissipatif dans l'anneau résonant, comprenant :

    ◦ un deuxième guide d'onde en anneau, dit guide à jonction, agencé vis-à-vis de l'anneau résonant de manière à être longitudinalement couplé optiquement à ce dernier, formé en un matériau dont l'indice de réfraction présente un écart vis-à-vis de celui du matériau de cœur de l'anneau résonant permettant le couplage modal entre les deux guides d'onde, et comportant une jonction semiconductrice s'étendant de manière parallèle à l'anneau résonant ;
    ◦ des moyens de polarisation électrique adaptés à appliquer une tension de polarisation de la jonction semiconductrice ;
    ◦ une unité de commande, connectée aux moyens de polarisation et couplée optiquement à la sortie, adaptée à modifier la valeur de la tension pour entraîner une modification d'un indice effectif du mode optique et donc de la longueur d'onde de résonance, jusqu'à la formation d'au moins un soliton temporel dissipatif dans l'anneau résonant.

Par couplage optique longitudinal du deuxième guide d'onde avec l'anneau résonant, on entend que le couplage optique est réalisé le long de l'axe longitudinal du deuxième guide d'onde. Par ailleurs, par jonction semiconductrice qui s'étend de manière parallèle à l'anneau résonant, on entend que la jonction s'étend suivant un axe longitudinal, lequel est localement parallèle à celui de l'anneau résonant. L'anneau résonant et le guide à jonction sont superposés l'un à l'autre. Ils peuvent être coaxiaux, et présentent de préférence une forme longitudinale sensiblement identique l'une à l'autre.

Certains aspects préférés mais non limitatifs de ce dispositif optoélectronique sont les suivants.

L'unité de commande peut être adaptée à détecter un signal optique à la sortie, à en déterminer une valeur d'un paramètre représentatif d'un accord spectral entre le signal de pompe et un mode optique de l'anneau résonant à la valeur de la tension appliquée, et à induire une modification de la valeur de ladite tension appliquée jusqu'à ce que la valeur dudit paramètre atteigne une valeur de référence représentative de la présence d'au moins un soliton temporel dissipatif dans l'anneau résonant.

Le matériau du guide à jonction peut être en silicium.

Le matériau de l'anneau résonant peut être un composé semiconducteur III-V, ou un élément IV ou un composé IV, voire en un composé IV-V.

Le matériau de l'anneau résonant peut être choisi parmi l'AlGaAs, le GaAs, le GaAsP, l'InGaP, l'In-GaAsP, l'InGaAs.

L'anneau résonant peut être monomode à la longueur d'onde de résonance.

La différence entre les indices de réfraction de l'anneau résonant et du guide à jonction peut être inférieure ou égale à 0,5.

Une distance moyenne séparant l'anneau résonant et le guide à jonction, suivant un axe orthogonal au plan suivant lequel s'étend l'anneau résonant, peut être comprise entre 75nm et 200nm.

Une largeur moyenne du guide à jonction peut être inférieure à celle de l'anneau résonant.

La largeur moyenne du guide à jonction peut être comprise entre 200nm et 500nm et celle de l'anneau résonant peut être comprise entre 400nm et 800nm.

Les matériaux de l'anneau résonant et du guide à jonction peuvent être entourés d'une gaine en oxyde de silicium.

L'invention porte également sur un procédé de génération d'un peigne de fréquences par un dispositif optoélectronique selon l'une quelconque des caractéristiques précédentes, comportant les étapes suivantes :

a) émission par la source laser (2) d'un signal de pompe monochromatique et continu à une longueur d'onde ($\lambda_p$) de pompe constante dans le temps, ladite longueur d'onde de pompe ($\lambda_p$) étant choisie pour former un mode optique dans l'anneau résonant (20) à la longueur d'onde de résonance ($\lambda_{res}$) ;

b) polarisation de la jonction semiconductrice par une tension (U) non nulle, de manière à provoquer une modification de la concentration des porteurs de charge au sein du guide à jonction (30), se traduisant par une modification de l'indice effectif du mode optique présent dans l'anneau résonant (20) et donc de la longueur d'onde de résonance ($\lambda_{res}$) ;

c) détection d'un signal optique à la sortie (12), et détermination, à partir du signal optique détecté, d'une valeur d'un paramètre représentatif d'un accord spectral entre le signal de pompe et le mode optique de l'anneau résonant (20) ;

d) modification de la valeur (U) de la tension de polarisation, jusqu'à ce que la valeur déterminée dudit paramètre représentatif atteigne une valeur de référence représentative de la présence d'au moins un soliton temporel dissipatif dans l'anneau résonant (20).

A une valeur dite initiale de la tension de polarisation, la longueur d'onde de pompe peut être inférieure à la longueur d'onde de résonance.

Lors de l'étape d), la modification de la valeur de la tension de polarisation par rapport à la valeur initiale peut entraîner une diminution de la longueur d'onde de résonance jusqu'à ce qu'elle soit inférieure à la longueur d'onde de pompe.

On peut déterminer la valeur d'une transmission optique du micro-résonateur optique, la valeur de référence étant une valeur minimale de la transmission optique lorsque la valeur de la tension de polarisation augmente.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés, outre les figures 1A-1D déjà décrites, sur lesquels :

la figure 1A est une vue de dessus, schématique et partielle, d'un dispositif optoélectronique de génération d'un peigne de fréquences selon un exemple de l'art antérieur ; les figures 1B et 1C illustrent respectivement un exemple de spectre en longueur d'onde du signal optique de pompe et un exemple de peigne de fréquences généré ; et la figure 1D illustre un exemple de spectre de résonance à forme non lorentzienne d'un anneau résonant réalisé en un matériau non linéaire d'ordre trois ;

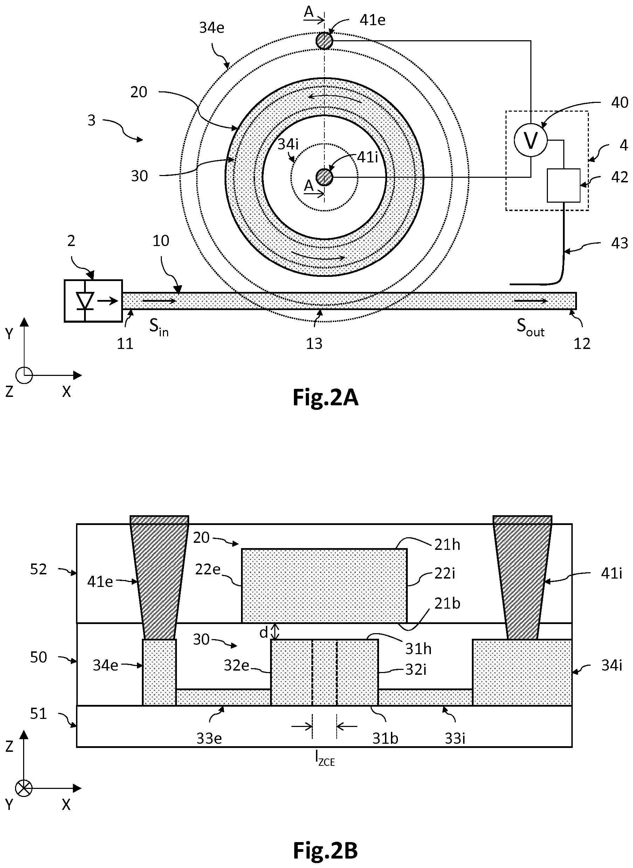

la figure 2A est une vue de dessus, schématique et partielle, d'un dispositif optoélectronique de génération d'un peigne de fréquences selon un mode de réalisation ; la figure 2B est une vue en coupe transversale de l'anneau résonant et du guide à jonction selon le plan de coupe A-A ;

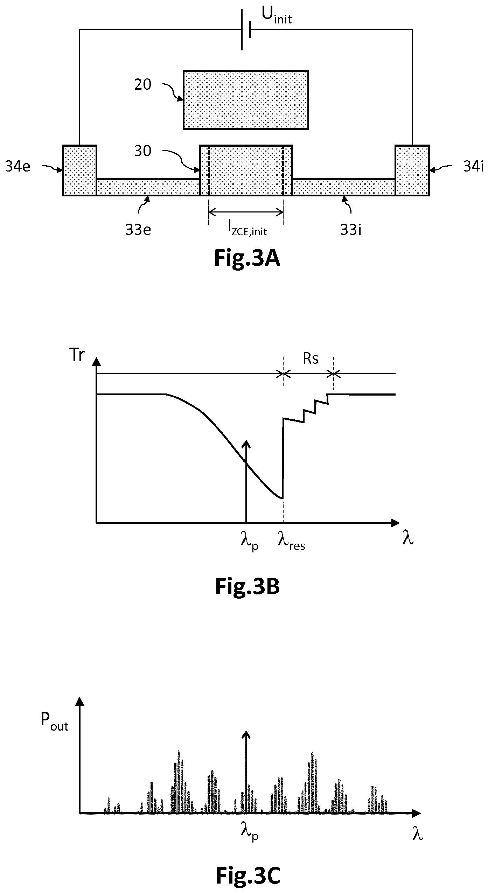

les figures 3A à 3C illustrent une première étape d'accord spectral dans laquelle la tension de polarisation appliquée présente une valeur dite initiale $U_{init}$ non nulle ; la fig.3A étant une vue en coupe transversale de l'anneau résonant et du guide à jonction, la fig.3B un spectre du signal de transmission optique présentant un accord spectral dans le bleu (*blue-detuning*), et la fig.3C un peigne de fréquences généré traduisant l'absence de solitons temporels dissipatifs ;

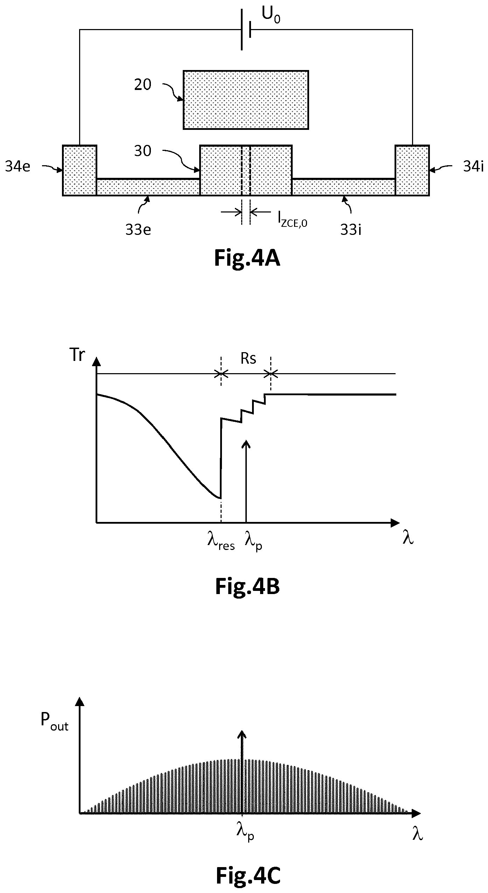

les figures 4A à 4C illustrent une étape ultérieure d'accord spectral dans laquelle la tension de polarisation présente une valeur inférieure, en valeur absolue, à la valeur initiale $U_{init}$, pour laquelle le régime solitonique Rs est obtenu ; la fig.4A étant une vue en coupe transversale de l'anneau résonant et du guide à jonction, la fig.4B un spectre du signal de transmission optique présentant un accord spectral dans le rouge (*red-detuning*), et la fig.4C le peigne de fréquences généré, celui-ci étant quasi-cohérent ou cohérent du fait de la présence de plusieurs ou d'un seul solitons temporels dissipatifs ;

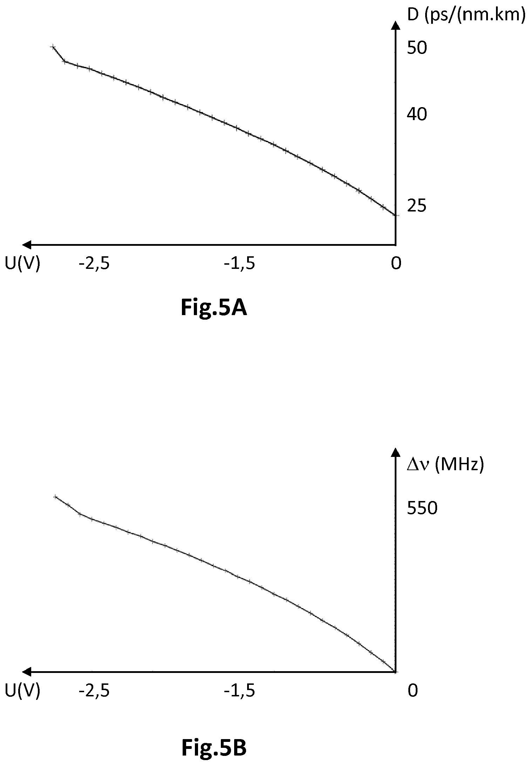

la figure 5A illustre un exemple d'évolution du paramètre de dispersion D associée au mode optique résonant en fonction de la valeur de la tension U de polarisation appliquée ; et la figure 5B illustre un exemple de valeur du décalage $\Delta v$ en fréquence de la résonance effective en fonction de la valeur de la tension U de polarisation appliquée.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

L'invention porte sur un dispositif optoélectronique de génération d'un peigne de fréquences quasi-cohérent ou cohérent. Il comporte un micro-résonateur optique qui forme un oscillateur paramétrique optique, dans lequel un peigne de fréquences est généré par un phénomène non linéaire d'ordre trois de mélange à quatre ondes en cascade, associé à la formation de solitons temporels dissipatifs de type Kerr. Le peigne de fréquences est dit quasi-cohérent lorsque les raies de fréquence sont partiellement en relation de phase les unes avec les autres, traduisant la présence de plusieurs solitons temporels. Il est dit cohérent, ou pleinement cohérent, lorsque toutes les raies de fréquence sont en relation de phase mutuelle, ce qui est le cas lorsqu'un unique soliton temporel est présent dans la cavité optique. Le régime de fonctionnement du générateur de peigne de fréquences est dit solitonique Rs lorsqu'un ou plusieurs solitons temporels sont présents.

Un oscillateur paramétrique optique est une source de lumière cohérente qui repose sur une amplification paramétrique dans un résonateur optique. Le résonateur optique comporte ici une cavité optique réalisée en un milieu non linéaire du troisième ordre, c'est-à-dire comportant une susceptibilité électrique $\chi^{(3)}$ d'ordre trois, permettant au mélange à quatre ondes cascadé d'avoir lieu, générant ainsi un peigne de fréquences.

Le mélange à quatre ondes cascadé est un phénomène non linéaire d'ordre trois dans lequel deux photons de fréquence de pompe $w_p$ sont convertis sans perte d'énergie en un photon dit signal de fréquence $w_s$ et d'un photon dit complémentaire (*idler,* en anglais) de fréquence $w_c$. Il est dit cascadé dans la mesure où les photons générés sont également à l'origine de la génération d'autres photons signal et complémentaire par mélange à quatre ondes.

L'effet Kerr optique est un phénomène non linéaire d'ordre trois qui exprime la dépendance de l'indice de réfraction d'un milieu vis-à-vis de l'intensité du signal optique qui le parcourt. Cette dépendance peut être formalisée par la relation : $n = n_0 + n2.I$ où $n$ est l'indice de réfraction du matériau, $n_0 = (1+\chi^{(1)})^{1/2}$ est l'indice de réfraction linéaire, où $\chi^{(1)}$ est la permittivité électrique d'ordre 1, $n2$ est l'indice non linéaire qui dépend de la permittivité électrique $\chi^{(3)}$ d'ordre 3, et $I$ est l'intensité du signal optique qui traverse le milieu.

Comme détaillé plus loin, pour permettre la formation des solitons temporels dissipatifs de Kerr, la cavité optique du micro-résonateur est réalisée en un matériau à effet Kerr optique, dont l'indice de réfraction et les dimensions opto-géométriques sont choisis pour présenter un régime de dispersion anormale associé au mode optique fondamental qu'elle supporte. Comme détaillé plus loin, l'indice de réfraction peut être élevé, par exemple proche de celui du silicium, de sorte que le guide d'onde en anneau présente des dimensions transversales telles qu'il est alors monomode.

La dispersion est dite anormale lorsque le paramètre de dispersion D est positif. Ce paramètre D, exprimé en ps/(nm.km), est défini comme le produit d'une grandeur $\beta_2$ et de $-2\pi c / \lambda_{res}^2$ où $\lambda_{res}$ est la longueur d'onde du mode fondamental supporté par l'anneau résonant à laquelle est accordé le signal de pompe, qui est inférieure à la longueur d'onde de pompe $\lambda_p$ lorsque le régime solitonique est atteint. La grandeur $\beta_2$, également appelée dispersion de la vitesse de groupe (GVD, pour *Group Velocity Dispersion,* en anglais), correspond au fait que la vitesse de groupe du signal optique est dépendante de la longueur d'onde du signal. Cette grandeur $\beta_2$ est définie comme étant égale à la dérivée de l'inverse de la vitesse de groupe du signal optique :

$$\beta_2 = \frac{\partial}{\partial w} \frac{1}{v_g}$$

où $v_g$ est la vitesse de groupe du signal optique considéré, $w$ la fréquence. Autrement dit, elle correspond à la dérivée seconde de $\beta(w)$ par rapport à $w$, à la longueur d'onde de résonance, où $\beta(w)$ est la constante de propagation qui dépend du caractéristiques opto-géométriques du guide d'onde et de la distribution spatiale du champ optique du mode associé.

Le dispositif optoélectronique comporte plusieurs guides d'onde. D'une manière générale, chaque guide d'onde présente une face inférieure et une face supérieure opposée, et repose sur un support au niveau de la face inférieure, et présente des flancs latéraux qui s'étendent à partir de la face supérieure jusqu'à la face inférieure. Il présente ainsi des dimensions transversales de hauteur et de largeur. Par hauteur, on entend la distance moyenne du guide d'onde, et plus précisément du matériau dit de cœur, suivant l'axe Z orthogonal au plan du support, entre les faces inférieure et supérieure. Par largeur, on entend la distance moyenne entre les flancs latéraux du guide d'onde, et plus précisément du matériau de cœur, dans un plan parallèle au plan du support. La hauteur et la largeur sont de préférence sensiblement constantes suivant l'étendue longitudinale du guide d'onde.

La figure 2A est une vue de dessus, schématique et partielle, d'un dispositif optoélectronique 1 de génération de peigne de fréquences selon un mode de réalisation, adapté à fournir un peigne quasi-cohérent ou cohérent. Ce dispositif optoélectronique 1 comporte une source laser 2 adaptée à émettre un signal optique monochromatique continu, un micro-résonateur optique 3 en anneau, et un dispositif d'accord spectral 4 adapté à réaliser l'accord spectral du mode résonant avec le signal de pompe en modifiant l'indice effectif du mode résonant supporté par le micro-résonateur 3, de manière à obtenir le régime solitonique Rs. La figure 2B est une vue en coupe transversale de l'anneau résonant 20 et du guide à jonction 30 suivant un plan A-A illustré sur la figure 2A.

Dans la suite de la description, on définit un repère orthogonal tridimensionnel (X,Y,Z) où les axes X et Y forment un plan parallèle aux plans suivant lesquels reposent les guides d'onde du dispositif optoélectronique, et où l'axe Z est orienté suivant la dimension d'épaisseur des guides d'onde.

La source laser 2 est adaptée à émettre un signal optique $S_{in}$ dit de pompe. Ce signal optique est continu et monochromatique, de longueur d'onde $\lambda_p$. La longueur d'onde de pompe $\lambda_p$ est alors sensiblement constante dans le temps. Elle est choisie pour être en mesure d'exciter de manière résonante un mode fondamental supporté par l'anneau résonant 20 du micro-résonateur optique 3. A titre d'exemple, elle peut être égale à 1,55$\mu$m environ dans le cas d'une application dite télécom, voire être égale à 1,31$\mu$m environ pour une application dite datacom, voire également être une longueur d'onde du visible ou de l'infrarouge, en particulier du moyen infrarouge.

La longueur d'onde de pompe $\lambda_p$ est prévue pour exciter un mode fondamental de l'anneau résonant 20 sans toutefois que le régime solitonique soit initialement atteint. En effet, dans la mesure où l'anneau résonant 20 est en un matériau à effets non linéaires d'ordre trois, la longueur d'onde de résonance effective $\lambda_{res}$ est supérieure à la longueur d'onde linéaire de résonance (du fait de la forme non lorentzienne triangulaire du spectre de résonance), la longueur d'onde de pompe $\lambda_p$ est initialement inférieure à la longueur d'onde de résonance effective $\lambda_{res}$, se traduisant alors par un accord spectral dans le bleu (*blue-detuning*), comme illustré sur la figure 3B. Le passage à l'accord spectral dans le rouge (*red-detuning*) pour adresser le régime solitonique Rs est effectué par le dispositif d'accord spectral 4 décrit plus loin.

Par ailleurs, la puissance du signal de pompe est choisie de manière à être supérieure aux pertes optiques présentes dans le micro-résonateur optique 3, de sorte que le gain paramétrique est supérieur aux pertes optiques et que l'amplification du signal optique dans le micro-résonateur optique 3 puisse générer un peigne de fréquences par mélange à quatre ondes en cascade. La source laser 2 peut être reportée sur la couche de gaine 52 entourant le guide de couplage 10 et l'anneau résonant 20, voire être intégrée à l'intérieur de cette couche 52.

Le micro-résonateur optique 3 en anneau comporte un guide d'onde 10 dit de couplage et un premier guide d'onde 20 en anneau, dit anneau résonant.

Le guide d'onde de couplage 10 comporte une entrée 11 et une sortie 12, qui forment également l'entrée et la sortie du micro-résonateur optique 3. L'entrée 11 est couplée optiquement à la source laser 2 pour recevoir le signal de pompe $S_{in}$ émis par celle-ci, et la sortie 12 est adaptée à fournir le peigne de fréquence généré. Il comporte une zone de couplage 13 permettant un couplage optique à l'anneau résonant 20 par onde évanescente.

Le guide d'onde de couplage 10 est réalisé en un matériau, dit de cœur, à haut indice de réfraction. Plus précisément il comporte un cœur formé en un matériau à haut indice de réfraction entouré d'une gaine 52 formé en un matériau de bas indice de réfraction. Le guide 10 repose sur une surface d'une couche support 50 dont le matériau participe à former la gaine. A titre d'exemple, le matériau de cœur du guide 10 est de préférence identique à celui de l'anneau résonant 20, et peut être choisi parmi les composés semiconducteurs III-V comportant au moins un élément de la colonne III et au moins un élément de la colonne V du tableau périodique, ou parmi les éléments ou composés semiconducteurs IV ou IV-V comportant au moins un élément de la colonne IV. A titre d'exemple, des composés III-V peuvent être, entre autres, de l'AlGaAs, du GaAs, de l'InGaAs, de l'InGaAsP, de l'InGaP. Les éléments ou composés IV ou IV-V peuvent être du Si, voire du SiN tel que le $Si_3N_4$. Le matériau de gaine peut être, entre autres, de l'oxyde de silicium SiO, par exemple du $SiO_2$.

Le guide d'onde 10 s'étend longitudinalement entre l'entrée 11 et la sortie 12, avec une forme qui peut être quelconque. A titre d'exemple, pour une longueur de pompe $\lambda_p$ de 1,55$\mu$m, les dimensions transversales du guide d'onde 10 peuvent aller de quelques centaines de nanomètres jusqu'à plusieurs micromètres. Le guide d'onde 10 peut être monomode ou multimode. Dans cet exemple, il est de préférence monomode et supporte un mode de type TE (transverse électrique).

Le premier guide d'onde en anneau 20, dit anneau résonant, forme la cavité optique du micro-résonateur 3. Comme pour tout oscillateur paramétrique optique de type Kerr, il comporte un matériau non linéaire d'ordre trois permettant de générer des ondes optiques de longueur d'onde différentes de la longueur d'onde de résonance par mélange à quatre ondes en cascade. De plus, l'anneau résonant 20 est dimensionné et présente un indice de réfraction de sorte que la dispersion chromatique soit anormale pour le mode optique résonant. Ainsi, il est possible de former un ou plusieurs solitons temporels dissipatifs de type Kerr permettant de rendre quasi-cohérent ou cohérent le peigne de fréquences généré par le mélange à quatre ondes en cascade.

L'anneau résonant 20 est un guide d'onde en forme d'anneau. Il comporte une zone de couplage optique permettant d'être couplé par onde évanescente au guide d'onde 10. Il peut s'étendre sous la forme d'un cercle, d'un ovale ou autre. Dans cet exemple, il présente une forme de cercle dont le rayon r est défini à partir d'une ligne longitudinale parcourant les barycentres transversaux de l'anneau résonant 20. Par barycentre transversal, on entend le barycentre associé localement à une section droite transversale du guide d'onde.

L'anneau résonant 20 est réalisé en un matériau de haut indice à propriétés optiques non linéaires d'ordre trois. Plus précisément, il est réalisé en un matériau dit de cœur à haut indice de réfraction entouré d'une gaine réalisée en un matériau de bas indice de réfraction. Le matériau de cœur peut être choisi parmi les composés III-V à effet Kerr optique, ou parmi les éléments ou composés IV, ou IV-V, à effet Kerr optique. De manière préférée, le matériau de cœur de l'anneau résonant est de l'AlGaAs, mais il peut également être du GaAs, de l'InGaAs, de l'InGaAsP, de l'InGaP, ou autre composé III-V à effet Kerr optique. Les éléments ou composés IV ou IV-V peuvent être du Si voire du SiN tel que le $Si_3N_4$. De plus, comme il sera précisé plus loin, le matériau de cœur de l'anneau résonant 20 présente un indice de réfraction, plus précisément un indice de réfraction linéaire, proche de celui du matériau du guide à jonction 30. Par ailleurs, le matériau de gaine peut être, entre autres, de l'oxyde de silicium SiO, par exemple du $SiO_2$. L'anneau résonant 20 présente une face supérieure 21h et une face inférieure 21b qui repose sur la couche support 50, et des flancs latéraux 22i, 22e qui s'étendent entre les faces supérieure 21h et inférieure 21b. Il présente une épaisseur $e_{ga}$ et une largeur $l_{ga}$ sensiblement constantes suivant son étendue longitudinale. Il repose sur la même couche support 50 que le guide d'onde de couplage 10 de sorte que la face inférieure 21b de l'anneau résonant 20 et celle du guide d'onde 10 sont sensiblement coplanaires.

L'anneau résonant 20 est adapté à être couplé optiquement au guide d'onde 10. Ainsi, il est dimensionné pour qu'il y ait accord de phase entre le mode optique fondamental, ici $TE_{00}$, supporté par le guide d'onde 10 et le mode optique résonant, ici $TE_{00}$, supporté par l'anneau résonant 20. Autrement dit, la constante de propagation du mode fondamental $TE_{00}$ supporté par l'anneau résonant 20 est égale à la constante de propagation du mode fondamental $TE_{00}$ supporté par le guide 10, ce qui se traduit ici par la quasi-égalité ou l'égalité entre l'indice effectif du mode fondamental $TE_{00}$ supporté par l'anneau résonant 20 avec celui du mode fondamental $TE_{00}$ supporté par le guide 10.

D'une manière générale, l'indice effectif $n_{eff}$ associé à un mode optique supporté par un guide d'onde est défini comme le produit de la constante de propagation $\beta$ et de $\lambda/2\pi$. La constante de propagation $\beta$ dépend de la longueur d'onde $\lambda$ du mode optique, ainsi que des propriétés du guide d'onde (indice de réfraction et dimensions transversales). L'indice effectif du mode optique correspond, d'une certaine manière, à l'indice de réfraction du guide d'onde 'vu' par le mode optique. Il est habituellement compris entre l'indice du cœur et l'indice de la gaine du guide d'onde.

L'anneau résonant 20 est de plus adapté à assurer une conversion paramétrique de fréquences par mélange à quatre ondes en cascade. Pour cela, le matériau de l'anneau résonant 20, c'est-à-dire son matériau dit de cœur, présente des propriétés optiques non-linéaires autorisant l'effet Kerr optique, et ainsi présente un indice de réfraction qui dépend de l'intensité du signal optique le parcourant. Le mélange à quatre ondes par effet Kerr optique est alors possible.

L'anneau résonant 20 est de plus adapté à former un ou plusieurs solitons temporels dissipatifs dits de Kerr. Par définition, un soliton est une onde optique solitaire qui se propage sans se déformer dans un milieu non-linéaire et dissipatif. Ces solitons sont dits de type Kerr dans la mesure où ils sont générés dans un matériau non-linéaire du troisième ordre par effet Kerr optique. Dans le mesure où le régime solitonique ne peut apparaître que dans une cavité optique où la dispersion est anormale, l'anneau résonant 20 est adapté de sorte que la dispersion soit anormale pour le mode résonant, ici $TE_{00}$, supporté par l'anneau résonant 20. Pour cela, comme le montre la publication d'Okawachi et al intitulée *Octavespanning frequency comb generation* in a *silicon nitride chip,* Opt. Lett. **36**, 3398 (2011), compte-tenu de l'indice de réfraction, c'est-à-dire ici de l'indice linéaire, du matériau de l'anneau résonant 20, les dimensions transversales de hauteur $e_{ar}$ et/ou de largeur $l_{ar}$ de l'anneau résonant 20 sont choisies de sorte que ce dernier présente un régime de dispersion anormale associé au mode fondamental, ici $TE_{00}$. Dans le cas où le matériau de cœur est un matériau III-V à effet Kerr optique, tel que l'AlGaAs, dont l'indice de réfraction est plus élevé, ici de l'ordre de 3,4 à 1,55 $\mu$m environ, la dispersion chromatique est anormale pour des dimensions d'épaisseur et/ou de largeur de l'anneau résonant 20 telles que le guide reste monomode.

A titre d'exemple, dans le cas d'une longueur d'onde de pompe $\lambda_p$ égale à 1,55$\mu$m environ, et pour un matériau du cœur de l'anneau résonant 20 en AlGaAs, la hauteur $e_{ga}$ est de préférence comprise entre 300nm et 500nm, et la largeur $l_{ga}$ est de préférence comprise entre 400nm et 800nm. Ainsi, le mode optique supporté par l'anneau résonant 20 présente un régime de dispersion anormale. Ces dimensions transversales rendent l'anneau résonant non pas multimode mais plutôt monomode, ce qui permet ainsi d'écarter les perturbations susceptibles de dégrader la formation des solitons temporels du fait d'interférences entre modes optiques, comme le décrit la publication de Kordts et al. intitulée High order mode suppression in high-Q anomalous dispersion SiN microresonators for temporal dissipative Kerr soliton formation, Opt. Lett. 41, 452 (2016).

Le dispositif d'accord spectral 4 est adapté à modifier la longueur d'onde de résonance $\lambda_{res}$ du mode optique supporté par l'anneau résonant 20 par rapport à la longueur d'onde de pompe $\lambda_p$ maintenue sensiblement constante dans le temps, jusqu'à atteindre le régime solitonique Rs dans l'anneau résonant 20. Pour cela, il comporte un guide d'onde 30 à jonction semiconductrice, des moyens de polarisation électrique 40 de la jonction semiconductrice, et une unité de commande 42 adaptée à modifier la valeur de la polarisation électrique appliquée à la jonction.

Le guide d'onde à jonction 30 est un deuxième guide d'onde en anneau du dispositif optoélectronique 1. Il est positionné à la verticale de l'anneau résonant 20, suivant l'axe Z, de telle sorte qu'il s'étend dans un plan parallèle au plan de l'anneau résonant 20. Il s'étend suivant un axe longitudinal parallèle à celui de l'anneau résonant 20, et présente ainsi une forme longitudinale sensiblement identique à celle de l'anneau résonant. L'anneau résonant 20 et le guide à jonction 30 sont donc superposés l'un à l'autre, et sont de préférence coaxiaux.

Le guide à jonction 30 présente une face inférieure 31b et une face supérieure 31h opposée, la face supérieure 31h étant orientée vers la face inférieure 21b de l'anneau résonant 20. La hauteur $e_{gj}$ du guide à jonction 30 est la distance moyenne entre ses faces inférieure 31b et supérieure 31h. La largeur $l_{gj}$ du guide est la distance moyenne entre ses flancs latéraux 32i, 32e. La hauteur et la largeur sont sensiblement constantes suivant l'étendue longitudinale du guide à jonction 30. Il repose sur un substrat 51 qui participe à former la gaine du guide à jonction 30 avec la couche support 50.

Des parties latérales interne 33i et externe 33e s'étendent radialement à partir du guide à jonction 30. Le guide 30 associé aux parties latérales 33i et 33e forme ainsi un guide d'onde à nervure (*rib waveguide,* en anglais). Ainsi, une partie latérale interne 33i s'étend à partir de la circonférence du flanc latéral interne 32i en direction du centre de l'anneau 30, et une partie latérale externe 33e s'étend à partir de la circonférence du flanc latéral externe 32e, en direction de l'extérieur de l'anneau 30. Les parties latérales interne 33i et externe 33e sont réalisées en le même matériau que celui du guide à jonction 30, et sont chacune dopées suivant un type de conductivité opposé. Ainsi, la partie latérale interne 33i peut être dopée de type N et la partie latérale externe 33e peut être dopée de type P, ou inversement. Les parties latérales 33i, 33e reposent chacune sur le substrat 51, mais présentent une hauteur locale inférieure à la hauteur $e_{gj}$ du guide à jonction 30, de manière à éviter l'étalement au niveau des parties latérales 33i, 33e du supermode optique présent dans le guide à jonction 30 et l'anneau résonant 20. A titre d'exemple, la hauteur $e_{gi}$ du guide 30 peut être de 300nm environ et la hauteur des parties latérales 33i, 33e peut être de 150nm environ, voire moins, par exemple 50nm.

Par ailleurs, des parties latérales interne 33i et externe 33e sont au contact de portions circonférentielles 34i, 34e surdopées. Les portions surdopées interne 34i et externe 34e sont réalisées en le même matériau que les parties latérales 33i, 33e et présentent chacune le même type de conductivité que la partie latérale 33i, 33e avec laquelle elle est au contact. Toutefois, elles présentent une densité de dopants supérieure à celle de la partie latérale 33i, 33e correspondante. Plus précisément, la portion surdopée interne 34i, resp. externe 34e, est au contact avec la partie latérale interne 33i, resp. externe 33e, et présente un niveau de dopage supérieur à cette dernière. Ces portions surdopées 34i, 34e permettent de diminuer la résistance série entre les électrodes de polarisation 41i, 41e et le guide à jonction 30.

Enfin, une électrode de polarisation interne 41i est au contact de la partie latérale interne 33i, ici par la portion surdopée interne 34i, et une électrode de polarisation externe 41e est au contact de la partie latérale externe 33e, ici par la portion surdopée externe 34e. Chaque électrode de polarisation 41i, 41e comporte un matériau électriquement conducteur qui remplit une tranchée réalisée dans le matériau de gaine 52 de l'anneau résonant 20 et dans la couche support 50, qui débouche sur la face supérieure de la portion surdopée interne 34i ou externe 34e. Ainsi, une différence de potentiel électrique, ou tension de polarisation U, peut être appliquée à la jonction semiconductrice du guide à jonction 30 par les électrodes 41i, 41e, par l'intermédiaire des parties latérales 33i, 33e et ici des portions surdopées 34i, 34e.

Le guide à jonction 30 comporte ainsi une jonction semiconductrice qui s'étend suivant l'axe longitudinal du guide d'onde, de manière sensiblement parallèle à l'anneau résonant 20. La jonction semiconductrice est de type PN ou PIN, voire est une jonction capacitive, et est formée d'une zone dopée de type N et d'une zone dopée de type P. Dans cet exemple, la jonction semiconductrice est de type PN dans le sens où les zones dopées N et P sont au contact l'une de l'autre, sans être séparées l'une de l'autre par une zone intrinsèque (i.e. non intentionnellement dopée) ou par une zone diélectrique. Ainsi, à titre purement illustratif, la portion interne 34i peut ici être surdopée N+, la partie latérale interne 33i dopée N, la partie latérale externe 33e dopée P, et la portion externe 34e surdopée P+. La zone dopée N du guide à jonction 30 est en continuité électrique avec la partie latérale interne 33i dopée N, et la zone dopée P est en continuité électrique avec la partie latérale externe 33e dopée P. Une zone de charge d'espace (ZCE) est formée à l'interface entre les zones dopées N et P du guide à jonction 30, dont la largeur $l_{ZCE}$ dépend de la tension U de polarisation appliquée. La modification de la concentration des porteurs dans le guide à jonction 30 lors de la polarisation de la jonction peut être effectuée par déplétion de porteurs lors d'une polarisation en inverse, ou par injection de porteurs, voire par accumulation de porteurs dans le cas d'une jonction capacitive. Des exemples classiques de jonctions semiconductrices dont les propriétés sont modifiées par déplétion, injection ou accumulation de porteurs sont donnés notamment dans la publication de Reed et al. intitulée Silicon optical modulators, Nature photonics 4, 518-526 (2010).

La jonction semiconductrice, en l'absence de polarisation, est de préférence située sensiblement au centre du guide à jonction 30. Les propriétés optiques du guide à jonction 30 sont destinées à être modifiées, en particulier l'indice effectif associé au mode optique, par une polarisation adéquate de la jonction semiconductrice, dans le but de modifier la longueur d'onde de

la résonance $\lambda_{res}$ du mode optique de l'anneau résonant 20.

Pour cela, le guide à jonction 30 présente des caractéristiques optiques et géométriques, ainsi qu'un positionnement vis-à-vis de l'anneau résonant 20, avantageusement choisis de manière à permettre un bon couplage modal entre les deux guides d'onde d'une part, et à maintenir un régime de dispersion anormale associé au mode optique dans l'anneau résonant 20 d'autre part.

Par couplage modal, on entend que le mode optique circulant dans l'anneau résonant 20 s'étend spatialement à la fois dans l'anneau résonant 20 et au moins en partie dans le guide à jonction 30, formant alors un supermode. Plus précisément, la composante du champ électrique du supermode optique présente une distribution spatiale qui recouvre l'anneau résonant 20 ainsi qu'au moins une partie du guide à jonction 30. Ainsi, par le couplage modal entre les deux guides d'onde, la modification de l'indice de réfraction du guide à jonction 30 va induire une modification de l'indice effectif du supermode et donc une variation de la longueur d'onde de résonance $\lambda_{res}$, tout en préservant le régime de dispersion anormale du supermode dans l'anneau résonant 20. Ces propriétés, associées au fait que l'anneau résonant 20 est réalisé en un matériau à effet Kerr optique, permettent de réaliser un accord spectral de la résonance avec le signal de pompe pour obtenir un régime solitonique.

Le couplage modal entre l'anneau résonant 20 et le guide à jonction 30 est assuré parleur positionnement relatif d'une part, et parle choix de leurs matériaux de cœur d'autre part. L'espacement vertical d entre le guide à jonction 30 et l'anneau résonant 20, à savoir la distance entre la face supérieure 31h et la face inférieure 21b, est compris entre une première valeur $d_{min}$ pour préserver la dispersion anormale dans l'anneau résonant 20 et une deuxième valeur $d_{max}$ supérieure à $d_{min}$ pour permettre le couplage modal. A titre illustratif, notamment dans le cas d'un anneau résonant 20 en AlGaAs et d'un guide à jonction 30 en silicium, la distance d est comprise entre 75nm et 200nm. De plus, les matériaux de cœur de l'anneau résonant 20 et du guide à jonction 30 sont choisis proches l'un de l'autre de manière à permettre l'étalement spatial du mode optique circulant dans l'anneau résonant 20 au niveau du guide à jonction 30. Plus précisément, les indices de réfraction $n_{ar}$ et $n_{gj}$ des matériaux de cœur présentent un écart inférieur ou égal à 0,5, de sorte que $|n_{ar}-n_{gj}| \leq 0,5$. Les indices de réfraction correspondent ici aux indices optiques linéaires des matériaux considérés. De préférence, le guide à jonction 30 est réalisé en silicium, dont l'indice de réfraction est égal à 3,48 à la longueur d'onde de 1,55$\mu$m, et l'anneau résonant 20 est réalisé en AlGaAs dont l'indice de réfraction est égal à 3,44 pour une concentration d'aluminium d'environ 20%. L'indice de réfraction est ici le terme linéaire de l'indice de réfraction. Le guide à jonction 30 peut être réalisé en un matériau identique à celui de l'anneau résonant ou en un matériau différent. Le matériau du guide à jonction 30 est de préférence du silicium, mais peut être du SiN, tel que le $Si_3N_4$, ou du AlGaAs, GaAs, InGaAs, InGaAsP, InGaP, ou autre. Il peut également être choisi parmi les chalcogénures.

Par ailleurs, le guide à jonction 30 présente des dimensions transversales, notamment en largeur $l_{gj}$, choisies de sorte que le régime de dispersion reste anormal dans l'anneau résonant 20, pour que la variation de la concentration de porteurs de charge dans le guide à jonction 30 puisse impacter la longueur d'onde de résonance $\lambda_{res}$ du supermode dans l'anneau résonant 20. La largeur $l_{gj}$ du guide à jonction 30 est ainsi comprise entre une première largeur $l_{min}$ pour pouvoir modifier la longueur d'onde de résonance $\lambda_{res}$ et une deuxième largeur $l_{max}$ supérieure à $l_{min}$ pour préserver la dispersion anormale dans l'anneau résonant 20, cette largeur $l_{max}$ étant inférieure à celle de l'anneau résonant 20. A titre illustratif, pour un anneau résonant 20 en AlGaAs d'une largeur comprise entre 400nm et 800nm et un guide à jonction 30 en silicium, la largeur $l_{gj}$ est comprise entre 200nm et 500nm, tout en étant toujours inférieure à la largeur $l_{ar}$ de l'anneau résonant 20.

Le dispositif d'accord spectral 4 comporte des moyens de polarisation électrique 40 de la jonction semiconductrice, adaptés à appliquer une différence de potentiel électrique à la jonction dans le but d'induire une modification de la concentration de porteurs de charge au sein du guide à jonction 30, entraînant ainsi une modification de l'indice effectif du supermode. Dans cet exemple, la jonction semiconductrice est polarisée en inverse de manière à induire une déplétion des porteurs dans le guide à jonction 30. Pour cela, les moyens de polarisation 40 comportent une source de tension, dont la valeur de la tension électrique U appliquée à la jonction semiconductrice est destinée à être modifiée. La source de tension 40 est reliée aux électrodes de polarisation 41e, 41i, permettant ainsi de polariser les zones dopées P et N de la jonction par l'intermédiaire des parties latérales interne 33i et externe 33e.

Le dispositif d'accord spectral 4 comporte une unité de commande 42, connectée aux moyens de polarisation électrique 40, et couplée optiquement à la sortie 12 du guide de couplage 10, et adaptée à modifier la valeur U de la tension électrique appliquée à la jonction semiconductrice jusqu'à ce que le régime solitonique soit atteint, c'est-à-dire jusqu'à ce qu'un ou plusieurs solitons temporels dissipatifs soient présents dans l'anneau résonant 20.

De préférence, l'unité de commande 42 comporte au moins un capteur optique et un calculateur. Le capteur optique est optiquement couplé à la sortie 12 pour recevoir un signal de détection correspondant à au moins une partie d'un signal optique de sortie, et déterminer une valeur d'un paramètre associée au signal optique détecté qui soit représentatif de l'accord spectral entre le signal de pompe et le mode optique de l'anneau résonant 20, pour la valeur U de la tension de polarisation appliquée. Le calculateur compare la valeur mesurée à une valeur de référence représentative de la présence d'au moins un soliton temporel dissipatif dans l'anneau résonant 20. L'unité de commande 42 est alors en mesure de modifier la valeur de la tension de polarisation U jusqu'à ce que la valeur déterminée atteigne la valeur de référence, traduisant ainsi l'obtention du régime solitonique.

A titre d'exemple, le paramètre représentatif de l'accord spectral peut être la valeur du taux de transmission déterminé à partir du signal optique détectée. Le taux de transmission optique du micro-résonateur optique 3 correspond au rapport de l'intensité du signal optique de sortie sur l'intensité du signal optique d'entrée. Comme l'indique la publication de Herr 2014, le taux de transmission Tr diminue à mesure que l'écart entre la longueur d'onde de résonance $\lambda_{res}$ et la longueur d'onde de pompe $\lambda_p$ diminue, avec $\lambda_{res}>\lambda_p$, ce qui caractérise le régime de *blue-detuning*. Puis, à partir d'une valeur minimale $Tr_{ref}$ de transmission optique qui peut alors correspondre à la valeur de référence, la transmission optique Tr augmente brusquement de manière discrète, c'est-à-dire par paliers, à mesure que l'écart entre la longueur d'onde de résonance $\lambda_{res}$ et la longueur d'onde de pompe $\lambda_p$ augmente, avec $\lambda_{res}<\lambda_p$, la longueur d'onde de pompe $\lambda_p$ restant sensiblement constante. Le régime solitonique est alors obtenu. Pour cela, l'unité de commande 4 peut comporter une photodiode couplée optiquement à la sortie 12, un oscilloscope, et un processeur muni d'une mémoire.

En variante ou en complément, l'obtention du régime solitonique peut être détectée à partir de l'analyse du bruit associé à un signal radiofréquence (RF) traduisant des interférences entre des raies de fréquences voisines du peigne généré, voire à partir du changement de signe d'un signal PDH (pour *Pound-Drever-Hall*, en anglais) en fonction de la tension V de polarisation appliquée.

Le fonctionnement du dispositif optoélectronique 1 selon le mode de réalisation est maintenant décrit, en référence aux figures 3A-3C et 4A-4C. Dans cet exemple, le guide à jonction 30 est réalisé en silicium et l'anneau résonant 20 en AlGaAs. La jonction semiconductrice est polarisée en inverse de sorte que la modification de l'indice effectif du mode optique supporté par l'anneau résonant 20 et le guide à jonction 30 soit obtenue par modification de la zone de déplétion des porteurs dans la jonction.

La source laser 2 émet un signal optique $S_{in}$ de pompe continu et monochromatique de longueur d'onde $\lambda_p$, dont un spectre est illustré sur la figure 1B. La longueur d'onde de pompe $\lambda_p$ reste donc sensiblement constante dans le temps. De plus, la tension de polarisation U appliquée en inverse à la jonction semiconductrice présente une valeur dite initiale $U_{init}$ non nulle pour laquelle la jonction présente une largeur de zone de charge d'espace dite initiale $l_{ZCE.init}$ supérieure à la largeur de zone de charge d'espace d'équilibre $l_{ZCE,0}$ pour laquelle la tension appliquée est nulle.

Le signal de pompe $S_{in}$ est transmis par le guide d'onde de couplage 10 en direction de la sortie 12. Dans la mesure où le guide d'onde 10 est monomode dans cet exemple, le signal de pompe correspond à un mode fondamental du guide 10, par exemple $TE_{00}$.

Par couplage optique de type évanescent entre le premier guide d'onde 10 et l'anneau résonant 20, le signal de pompe $S_{in}$ excite de manière résonante un mode fondamental de l'anneau résonant 20, ici le mode $TE_{00}$. Plus précisément, le couplage optique est réalisé par l'accord de phase entre le mode fondamental $TE_{00}$ du premier guide 10 et le mode fondamental $TE_{00}$ de l'anneau résonant 20. Ainsi, une grande partie ou la quasi-totalité du signal optique $S_{in}$ est transmise du guide de couplage 10 dans l'anneau résonant 20.

Le mode optique parcourant l'anneau résonant 20 s'étale spatialement de manière à recouvrir, par couplage modal, à la fois l'anneau résonant 20 et le guide à jonction 30 superposés l'un à l'autre, et forme ainsi un supermode. Le couplage modal est possible du fait de la valeur de la distance d séparant verticalement l'anneau résonant 20 et le guide à jonction 30 d'une part, et par l'écart faible entre l'indice de réfraction $n_{ar}$ de l'anneau résonant 20 et l'indice de réfraction $n_{gj}$ du guide à jonction 30, de préférence tel que $|n_{ar}-n_{gj}|=|\Delta n|\le 0,5$, d'autre part. L'indice effectif $n_{eff}$ associé au supermode dépend ainsi des indices de réfraction $n_{ar}$ et $n_{gj}$ et des dimensions géométriques des guides d'onde 20, 30. Dans la mesure où l'indice de réfraction $n_{gj}$ dépend de la tension de polarisation U, l'indice effectif $n_{eff}$ dépend également de la tension de polarisation U.

Le supermode présente une longueur d'onde de résonance effective $\lambda_{res}$, qui est de forme non lorentzienne triangulaire du fait des propriétés optiques non linéaires d'ordre trois du matériau de l'anneau résonant 20. Par définition, la longueur d'onde de résonance $\lambda_{res}$ à l'ordre m est définie par la relation : $2\pi n_{eff}=m\lambda_{res,m}$, ici dans le cas où l'anneau résonant 20 forme un cercle de rayon r, $n_{eff}$ étant l'indice effectif du supermode. La longueur d'onde de résonance $\lambda_{res}$ est supérieure à la longueur d'onde de résonance dite linéaire $\lambda_{lin}$ pour le même ordre m, celle-ci correspondant au cas où le matériau de l'anneau résonant 20 est optiquement linéaire. Dans la mesure où l'indice effectif $n_{eff}$ dépend de la tension de polarisation U, la longueur d'onde de résonance $\lambda_{res}$ dépend également de la tension de polarisation U.

De préférence, la longueur d'onde de pompe $\lambda_p$ a été choisie pour être inférieure à la longueur d'onde de résonance effective $\lambda_{res}$ à la tension $U_0$, et peut avoir été choisie proche, voire égale, à la longueur d'onde de résonance linéaire $\lambda_{lin}$. Aussi, comme l'illustre la figure 3B, le signal de pompe et le mode résonant présentent initialement, pour $U_{init}$, un accord spectral dans le bleu (*blue-detuning*, en anglais). Le signal de pompe excite toutefois un mode résonant de l'anneau résonant 20, ce qui permet de générer un peigne de fréquences par mélange à quatre ondes en cascade, le peigne n'étant cependant pas cohérent dans la mesure où le régime solitonique Rs n'est pas atteint, comme représenté sur la figure 3C.

Le dispositif d'accord spectral 4 opère alors une diminution de la longueur d'onde de résonance $\lambda_{res}$ vis-à-vis de la longueur d'onde de pompe $\lambda_p$ qui reste sensiblement constante, en appliquant une diminution continue, en valeur absolue, de la tension de polarisation U à la jonction semiconductrice, jusqu'à la formation d'un ou plusieurs solitons temporels dissipatifs dans l'anneau résonant 20.

Dans cet exemple, la formation de solitons temporels dissipatifs est détectée à partir de l'évolution de la valeur du taux de transmission Tr du dispositif optoélectronique 1. A l'aide d'un guide d'onde de détection 43, tout ou partie du signal de sortie est reçu puis transmis à une photodiode qui fournit l'intensité du signal optique détecté. Un oscilloscope enregistre la valeur de l'intensité du signal détecté en fonction de la valeur de la tension de polarisation U. On en déduit ainsi un signal du taux de transmission Tr en fonction de la tension de polarisation U. Ainsi, pour la tension initiale appliquée $U_{init}$, on obtient un taux de transmission initial $Tr_{init}$.

Dans cet exemple, le dispositif d'accord spectral 4 applique une tension de polarisation U en inverse à la jonction semiconductrice, dont la valeur U, comprise entre la valeur initiale et la valeur d'équilibre $U_0$, diminue progressivement en valeur absolue. Cela se traduit par une diminution de la largeur $l_{ZCE}$ de la zone de charge d'espace (figure 4A), qui traduit une augmentation progressive de la concentration des porteurs dans la jonction semiconductrice. L'indice de réfraction $n_{gj}(U)$ du guide à jonction 30 est modifié, ce qui entraîne ici une diminution de l'indice effectif $n_{eff}(U)$ associé au supermode, et donc une diminution de la longueur d'onde de résonance $\lambda_{res}(U)$. L'oscilloscope enregistre la baisse du taux de transmission $Tr(U)$ à mesure que la tension U diminue en valeur absolue, ce qui indique que l'accord spectral entre le signal de pompe et le mode résonant reste dans le bleu (*blue-detuning*).

Cependant, à partir d'une valeur U inférieure ou égale à une valeur de référence $U_{ref}$, en valeur absolue, la longueur d'onde de résonance effective $\lambda_{res}(U \geq U_{ref})$ devient inférieure à la longueur d'onde de pompe $\lambda_p$, c'est-à-dire que l'accord spectral est dans le rouge (*red-detuning*), comme l'illustre la figure 4B. L'oscilloscope détecte alors une augmentation par palier du taux de transmission $Tr(U)$, signe que le régime solitonique est atteint. La formation de solitons temporels dissipatifs est en effet effective lorsque l'accord spectral est dans le rouge, dans la mesure où le régime de dispersion reste anormal malgré la présence du guide à jonction 30. Comme décrit précédemment, le dimensionnement du guide à jonction 30, notamment sa largeur $l_{gj}$ par rapport à celle de l'anneau résonant 20, et la valeur de la distance d permettent de garder anormale la dispersion du supermode.

Lorsque le régime solitonique est atteint, le dispositif d'accord spectral 4 stoppe la diminution de la tension de polarisation U. La valeur de la tension est alors comprise entre la valeur de référence $U_{ref}$ et la valeur d'équilibre $U_0$. Cependant, le nombre de solitons présents dans l'anneau résonant 20 peut être contrôlé en fonction de la valeur U de la tension de polarisation appliquée. Plus précisément, l'augmentation par paliers du taux de transmission traduit la diminution du nombre de solitons présents dans l'anneau résonant 20. Il est également possible de détecter la pleine cohérence du peigne de fréquences en comparant l'enveloppe spectrale du peigne de fréquences généré vis-à-vis de la fonction $\sinh^2$ (figure 4C).

Ainsi, en sortie 12 du guide d'onde 10, un peigne de fréquences cohérent est obtenu. Il présente un intervalle spectral libre constant, c'est-à-dire une valeur constante d'espacement entre les raies de fréquence successives, ainsi qu'un bruit faible de fréquence et/ou d'amplitude. De plus, lorsqu'un unique soliton temporel dissipatif parcourt l'anneau résonant, l'amplitude des raies de fréquences est pondérée par une enveloppe spectrale de type sinus hyperbolique au carré ($\sinh^2$) centrée sur la longueur d'onde $\lambda_p$ de pompe, traduisant ainsi la cohérence du peigne de fréquences.

Le dispositif optoélectronique 1 est ainsi en mesure de réaliser un accord spectral entre le signal de pompe et le mode résonant présentant dans le micro-résonateur optique 3 pour atteindre le régime solitonique Rs, et ainsi générer un peigne de fréquences quasi-cohérent ou cohérent. A la différence de l'exemple de l'art antérieur mentionné précédemment, le dispositif d'accord spectral 4 ne comporte pas de laser accordable qui soit en mesure de réaliser un balayage suffisamment fin et précis de la résonance. Un tel laser accordable présente les inconvénients de ne pas être intégrable simplement au niveau du substrat de support et peut être encombrant. Il peut également ne pas être assez précis, ce qui peut se traduire par une difficulté à adresser le régime solitonique. En effet, comme le montre la figure 1D, le régime solitonique n'existe que pour sur une largeur étroite du spectre de résonance.

Au contraire, l'accord spectral est assuré en maintenant sensiblement constante la longueur d'onde de pompe $\lambda_p$ et en utilisant un guide à jonction positionné vis-à-vis de l'anneau résonant 30 pour permettre la formation d'un supermode, dont l'indice effectif est modifié par la polarisation de la jonction semiconductrice. La modification de l'indice effectif, et donc de la longueur d'onde de résonance $\lambda_{res}$ du supermode, permet de passer du *blue-detuning* au *red-detuning*, condition nécessaire pour la formation de solitons temporels dissipatifs. Ainsi, l'accord spectral est simplifié, rapide et précis, via un dispositif d'accord spectral facilement intégrable au sein d'un substrat, notamment de type SOI.

Par ailleurs, lorsque l'anneau résonant 20 est en un matériau III-V à effet Kerr optique et que le guide à jonction 30 est en silicium, l'anneau résonant 20 présente un régime de dispersion anormale pour des dimensions transversales d'épaisseur et de largeur telles qu'il reste monomode. Cela permet d'éviter la présence de plusieurs modes optiques dans l'anneau résonant 20, dont les éventuelles interférences sont susceptibles de dégrader la formation des solitons temporels dissipatifs de type Kerr.

A titre purement illustratif, le dispositif optoélectronique 1 peut comporter une source laser 2 adaptée à émettre un signal optique de pompe monochromatique (continu), d'une longueur d'onde sensiblement constante dans le temps par exemple égale à 1,55$\mu$m. Le signal de pompe est guidé dans le guide d'onde de couplage 10, celui-ci étant monomode et supportant le mode fondamental $TE_{00}$.

L'anneau résonant 20 est réalisé en AlGaAs qui est un matériau III-V à effet Kerr optique dont la valeur de l'indice non-linéaire n2 est élevée. Ainsi, la puissance optique nécessaire à la génération d'un peigne de fréquence par mélange à quatre ondes cascadé est faible, inférieure à 10mW, et reste inférieure à la puissance optique d'absorption à deux photons du silicium formant le guide à jonction 30. Il repose sur une couche support 50 d'oxyde de silicium $SiO_x$, par exemple $SiO_2$, et présente une forme de cercle de rayon r de 12,5$\mu$m environ, une épaisseur $e_{ga}$ de 400nm environ et une largeur $l_{ga}$ de 630nm environ. L'anneau résonant 20 est donc monomode à 1,55$\mu$m et supporte ici le mode fondamental $TE_{00}$. L'anneau résonant 20 présente un paramètre de dispersion chromatique D associé au mode fondamental $TE_{00}$ à 1,55$\mu$m égal à 764,2 ps/(nm.km) en l'absence de guide à jonction 30. L'anneau résonant 20 est entouré d'une gaine réalisée ici en oxyde de silicium $SiO_2$.

Par ailleurs, le guide à jonction 30 est réalisé en Si. Il est superposé à l'anneau résonant 20 suivant la direction -Z, et présente une forme de cercle de rayon 12,5$\mu$m également. Le guide à jonction 30 présente une épaisseur $e_{gj}$ de 300nm environ et la largeur $l_{gj}$ est de 280nm environ. La distance d séparant le guide à jonction 30 de l'anneau résonant 20 est de 100nm environ. Ainsi, la dispersion du supermode reste bien anormale malgré la présence du guide à jonction 30, autorisant ainsi la formation de solitons temporels dissipatifs.

Dans cet exemple, la jonction semiconductrice est polarisée en inverse, entraînant ainsi une déplétion contrôlée des porteurs dans la zone de charge d'espace. Plus précisément, la ZCE présente une largeur initiale $l_{ZCE,init}$ à $U_{init}$ qui diminue avec la baisse de la valeur U de la tension de polarisation (en valeur absolue). De plus, la tension initiale $U_{init}$ appliquée est choisie pour dépléter entièrement le guide à jonction 30, de sorte que $l_{ZCE,init} \sim l_{gj}$, permettant ainsi d'augmenter le décalage spectral de la résonance $\Delta\lambda_{res} = \lambda_{res}(U_0=0) - \lambda_{res}(U)$, et faciliter ainsi l'accord spectral dans le rouge entre le signal de pompe et le mode résonant, tout en restant inférieure à la tension de claquage pour ne pas endommager la jonction semiconductrice. Dans cet exemple, la densité de dopants accepteurs et donneurs dans les parties latérales interne 33i et externe 33e sont de $N_a=N_d=1,25.10^{17}cm^{-3}$.

Comme l'illustre la figure 5A, la valeur du paramètre de dispersion chromatique D du mode optique dans l'anneau résonant 20 dépend de la tension U de polarisation appliquée à la jonction semiconductrice. Ainsi, dans cet exemple, le paramètre D varie entre une valeur de 24 ps/(nm.km) à tension d'équilibre $U_0$ nulle, et une valeur de 50 ps/(nm.km) à une tension $U_{init}$ initiale de -2,8V environ. Il reste positif quelle que soit la valeur de la tension U comprise entre $U_{init}$ et $U_0$, traduisant ainsi le fait que la dispersion reste anormale lors de la phase d'accord spectral pour l'obtention du régime solitonique. Ainsi, la présence du guide à jonction 30 et l'application de la tension de polarisation ne perturbent pas la formation des solitons temporels dissipatifs dans l'anneau résonant 20.

La figure 5B illustre un exemple d'évolution de la valeur du décalage $\Delta v_{res}$ en fréquence de la résonance en fonction de la tension U de polarisation. Le décalage en fréquence $\Delta v_{res}$ de la résonance est défini comme l'écart entre la fréquence de résonance $w_{res}(U_0)$ à tension $U_0$ nulle et la fréquence de résonance $w_{res}(U)$ à tension U non nulle : $\Delta v_{res}(U) = w_{res}(U) - w_{res}(U_0)$. Dans cet exemple, la jonction semiconductrice est polarisée en inverse, ce qui conduit à une déplétion des porteurs. Ainsi, le décalage en fréquence $\Delta v$ est ici de l'ordre de 550MHz lorsque la tension de polarisation U atteint une valeur de -2,8V environ.

Des modes de réalisation particuliers viennent d'être décrits. Différentes variantes et modifications apparaîtront à l'homme du métier.

Ainsi, le mode résonant présent dans l'anneau résonant 20 mentionné précédemment est le mode TE (transverse électrique) mais il pourrait s'agir du mode TM (transverse magnétique). Dans ce cas, le facteur de qualité de l'anneau résonant 20 peut être plus élevé dans la mesure où le supermode TM ne perçoit que la rugosité des faces inférieure et supérieure des guides d'onde puisqu'il oscille suivant l'axe Z et non pas dans le plan XY. Or, les faces inférieure et supérieure des guides d'onde présentent une rugosité inférieure, au moins d'un ordre de grandeur, à celle des flancs latéraux.

## Revendications

1. Dispositif optoélectronique (1) de génération d'un peigne de fréquences, comportant :

      ◦ une source laser (2) adaptée à émettre un signal optique dit de pompe, continu et monochromatique d'une longueur d'onde de pompe ($\lambda_p$) constante dans le temps ;
      ◦ un micro-résonateur optique (3) en anneau, comportant :

            ■ un guide d'onde (10) dit de couplage, comportant une entrée (11) optiquement couplée à la source laser (2), et une sortie (12) destinée à fournir le peigne de fréquences généré ;

- ■ un premier guide d'onde (20) en anneau, dit anneau résonant, couplé optiquement au guide d'onde de couplage (10) pour générer un mode optique dans l'anneau résonant (20) à une longueur d'onde de résonance ($\lambda_{res}$), et formé en un matériau optiquement non linéaire d'ordre trois qui présente un indice de réfraction ($n_{ar}$) et des dimensions transversales ($l_{ar}$, $e_{ar}$) tels que l'anneau résonant (20) présente un régime de dispersion anormale associé audit mode optique ;

○ un dispositif d'accord spectral (4) adapté à accorder la longueur d'onde de résonance ($\lambda_{res}$) par rapport à la longueur d'onde de pompe ($\lambda_p$) pour former au moins un soliton temporel dissipatif dans l'anneau résonant, comprenant :

- ■ un deuxième guide d'onde (30) en anneau, dit guide à jonction, agencé vis-à-vis de l'anneau résonant (20) de manière à être longitudinalement couplé optiquement le long de son axe longitudinal à ce dernier, formé en un matériau dont l'indice de réfraction ($n_{gj}$) présente un écart vis-à-vis de celui ($n_{ar}$) du matériau de cœur de l'anneau résonant permettant le couplage modal entre les deux guides d'onde (20, 30), et comportant une jonction semiconductrice s'étendant suivant son axe longitudinal de manière localement parallèle à celui de l'anneau résonant (20) ;
- ■ des moyens de polarisation électrique (40) adaptés à appliquer une tension (U) de polarisation de la jonction semiconductrice ;
- ■ une unité de commande (42), connectée aux moyens de polarisation (40) et couplée optiquement à la sortie (12), adaptée à modifier la valeur de la tension (U) pour entraîner une modification d'un indice effectif du mode optique et donc de la longueur d'onde de résonance ($\lambda_{res}$), jusqu'à la formation d'au moins un soliton temporel dissipatif dans l'anneau résonant (20).

2. Dispositif (1) selon la revendication 1, dans lequel l'unité de commande (42) est adaptée à détecter un signal optique à la sortie (12), à en déterminer une valeur d'un paramètre représentatif d'un accord spectral entre le signal de pompe et un mode optique de l'anneau résonant (20) à la valeur de la tension (U) appliquée, et à induire une modification de la valeur de ladite tension (U) appliquée jusqu'à ce que la valeur dudit paramètre atteigne une valeur de référence représentative de la présence d'au moins un soliton temporel dissipatif dans l'anneau résonant (20).

3. Dispositif (1) selon la revendication 1 ou 2, dans lequel le matériau du guide à jonction (30) est en silicium.

4. Dispositif (1) selon l'une quelconque des revendications 1 à 3, dans lequel le matériau de l'anneau résonant (20) est un composé semiconducteur III-V, ou un élément IV ou un composé IV.

5. Dispositif (1) selon l'une quelconque des revendications 1 à 4, dans lequel le matériau de l'anneau résonant (20) est choisi parmi l'AlGaAs, le GaAs, le GaAsP, l'InGaP, l'InGaAsP, l'InGaAs.

6. Dispositif (1) selon l'une quelconque des revendications 1 à 5, dans lequel l'anneau résonant (20) est monomode à la longueur d'onde de résonance ($\lambda_{res}$).

7. Dispositif (1) selon l'une quelconque des revendications 1 à 6, dans lequel la différence entre les indices de réfraction ($n_{ar}$, $n_{gj}$) de l'anneau résonant (20) et du guide à jonction (30) est inférieure ou égale à 0,5.

8. Dispositif (1) selon l'une quelconque des revendications 1 à 7, dans lequel une distance moyenne (d) séparant l'anneau résonant (20) et le guide à jonction (30), suivant un axe orthogonal au plan suivant lequel s'étend l'anneau résonant (20), est comprise entre 75nm et 200nm.

9. Dispositif (1) selon l'une quelconque des revendications 1 à 8, dans lequel une largeur moyenne ($l_{gj}$) du guide à jonction (30) est inférieure à celle ($l_{ar}$) de l'anneau résonant (20).

10. Dispositif (1) selon la revendication 9, dans lequel la largeur moyenne ($l_{gj}$) du guide à jonction (30) est comprise entre 200nm et 500nm et celle ($l_{ar}$) de l'anneau résonant (20) est comprise entre 400nm et 800nm.

11. Dispositif (1) selon l'une quelconque des revendications 1 à 10, dans lequel les matériaux de l'anneau résonant (20) et du guide à jonction (30) sont entourés d'une gaine en oxyde de silicium.

12. Procédé de génération d'un peigne de fréquence par un dispositif optoélectronique (1) selon l'une quelconque des revendications précédentes, comportant les étapes suivantes :

a) émission par la source laser (2) d'un signal de pompe monochromatique et continu à une

longueur d'onde ($\lambda_p$) de pompe constante dans le temps, ladite longueur d'onde de pompe ($\lambda_p$) étant choisie pour former un mode optique dans l'anneau résonant (20) à la longueur d'onde de résonance ($\lambda_{res}$) ;

b) polarisation de la jonction semiconductrice par une tension (U) non nulle, de manière à provoquer une modification de la concentration des porteurs de charge au sein du guide à jonction (30), se traduisant par une modification de l'indice effectif du mode optique présent dans l'anneau résonant (20) et donc de la longueur d'onde de résonance ($\lambda_{res}$) ;

c) détection d'un signal optique à la sortie (12), et détermination, à partir du signal optique détecté, d'une valeur d'un paramètre représentatif d'un accord spectral entre le signal de pompe et le mode optique de l'anneau résonant (20) ;

d) modification de la valeur (U) de la tension de polarisation, jusqu'à ce que la valeur déterminée dudit paramètre représentatif atteigne une valeur de référence représentative de la présence d'au moins un soliton temporel dissipatif dans l'anneau résonant (20).

13. Procédé selon la revendication précédente, dans lequel, à une valeur dite initiale ($U_{init}$) de la tension (U) de polarisation, la longueur d'onde de pompe ($\lambda_p$) est inférieure à la longueur d'onde de résonance ($\lambda_{res}$).

14. Procédé selon la revendication précédente, dans lequel, lors de l'étape d), la modification de la valeur (U) de la tension de polarisation par rapport à la valeur initiale ($U_{init}$) entraîne une diminution de la longueur d'onde de résonance ($\lambda_{res}$) jusqu'à ce qu'elle soit inférieure à la longueur d'onde de pompe ($\lambda_p$).

15. Procédé selon l'une quelconque des revendications 12 à 14, dans lequel on détermine la valeur d'une transmission optique du micro-résonateur optique (3), la valeur de référence étant une valeur minimale de la transmission optique lorsque la valeur (U) de la tension de polarisation augmente.

**Patentansprüche**

1. Optoelektronische Vorrichtung (1) zur Erzeugung eines Frequenzkamms, umfassend:

   ○ eine Laserquelle (2), die dazu angepasst ist, ein optisches Signal, als Pumpsignal bezeichnet, zu emittieren, das kontinuierlich und monochromatisch ist und eine zeitlich konstante Pumpwellenlänge ($\lambda_p$) aufweist;
   ○ einen ringförmigen optischen Mikroresonator (3), umfassend:

   ▪ einen Wellenleiter (10), als Kopplungswellenleiter bezeichnet, der einen Eingang (11), der optisch mit der Laserquelle (2) gekoppelt ist, und einen Ausgang (12), der dazu bestimmt ist, den erzeugten Frequenzkamm bereitzustellen, umfasst;

   ▪ einen ersten ringförmigen Wellenleiter (20), als Resonanzring bezeichnet, der optisch mit dem Kopplungswellenleiter (10) gekoppelt ist, um in dem Resonanzring (20) eine optische Mode mit einer Resonanzwellenlänge ($\lambda_{res}$) zu erzeugen, und aus einem optisch nichtlinearen Material dritter Ordnung gebildet ist, das einen Brechungsindex ($n_{ar}$) und Querabmessungen ($l_{ar}$, $e_{ar}$) aufweist, die derart sind, dass der Resonanzring (20) einen mit der optischen Mode assoziierten Betrieb mit anormaler Dispersion aufweist;

   ○ eine Vorrichtung für einen spektralen Abgleich (4), die dazu angepasst ist, die Resonanzwellenlänge ($\lambda_{res}$) mit der Pumpwellenlänge ($\lambda_p$) abzugleichen, um mindestens ein dissipatives zeitliches Soliton in dem Resonanzring zu bilden, beinhaltend:

   ▪ einen zweiten ringförmigen Wellenleiter (30), als Übergangsleiter bezeichnet, der gegenüber dem Resonanzring (20) angeordnet ist, um entlang seiner Längsachse mit diesem in Längsrichtung optisch gekoppelt zu sein, gebildet aus einem Material, dessen Brechungsindex ($n_{gj}$) gegenüber demjenigen ($n_{ar}$) des Kernmaterials des Resonanzrings eine Abweichung aufweist, was die modale Kopplung zwischen den zwei Wellenleitern (20, 30) ermöglicht, und umfassend einen Halbleiterübergang, der sich gemäß seiner Längsachse auf lokal parallele Weise zu der des Resonanzrings (20) erstreckt;

   ▪ elektrische Polarisationsmittel (40), die dazu angepasst sind, eine Polarisationsspannung (U) des Halbleiterübergangs anzulegen;

   ▪ eine Steuereinheit (42), die mit den Polarisationsmitteln (40) verbunden und optisch mit dem Ausgang (12) gekoppelt ist und die dazu angepasst ist, den Wert der Spannung (U) zu verändern, um eine Veränderung eines effektiven Indexes der optischen Mode und somit der Resonanzwellenlänge ($\lambda_{res}$) herbeizuführen, bis mindestens ein dissipatives zeitliches Soliton in dem Resonanzring (20) gebildet wird.

2. Vorrichtung (1) nach Anspruch 1, wobei die Steuereinheit (42) dazu angepasst ist, ein optisches Signal an dem Ausgang (12) zu detektieren, von diesem einen Wert eines Parameters zu bestimmen, der für einen spektralen Abgleich zwischen dem Pumpsignal und einer optischen Mode des Resonanzrings (20) bei dem Wert der angelegten Spannung (U) repräsentativ ist, und eine Veränderung des Werts der angelegten Spannung (U) zu bewirken, bis der Wert des Parameters einen Referenzwert erreicht, der für das Vorhandensein mindestens eines dissipativen zeitlichen Solitons in dem Resonanzring (20) repräsentativ ist.

3. Vorrichtung (1) nach Anspruch 1 oder 2, wobei das Material des Übergangsleiters (30) aus Silizium besteht.

4. Vorrichtung (1) nach einem beliebigen der Ansprüche 1 bis 3, wobei das Material des Resonanzrings (20) eine III-V-Halbleiterverbindung oder ein IV-Element oder eine IV-Verbindung ist.

5. Vorrichtung (1) nach einem beliebigen der Ansprüche 1 bis 4, wobei das Material des Resonanzrings (20) aus AlGaAs, GaAs, GaAsP, InGaP, InGaAsP, InGaAs ausgewählt ist.

6. Vorrichtung (1) nach einem beliebigen der Ansprüche 1 bis 5, wobei der Resonanzring (20) bei der Resonanzwellenlänge ($\lambda_{res}$) monomodal ist.

7. Vorrichtung (1) nach einem beliebigen der Ansprüche 1 bis 6, wobei die Differenz zwischen den Brechungsindizes ($n_{ar}$, $n_{gj}$) des Resonanzrings (20) und des Übergangsleiters (30) kleiner als oder gleich 0,5 ist.

8. Vorrichtung (1) nach einem beliebigen der Ansprüche 1 bis 7, wobei ein mittlerer Abstand (d), der den Resonanzring (20) und den Übergangsleiter (30) trennt, gemäß einer Achse, die zu der Ebene, gemäß der sich der Resonanzring (20) erstreckt, orthogonal ist, zwischen 75 nm und 200 nm liegt.

9. Vorrichtung (1) nach einem beliebigen der Ansprüche 1 bis 8, wobei eine mittlere Breite ($l_{gj}$) des Übergangsleiters (30) kleiner als diejenige ($l_{ar}$) des Resonanzrings (20) ist.

10. Vorrichtung (1) nach Anspruch 9, wobei die mittlere Breite ($l_{gj}$) des Übergangsleiters (30) zwischen 200 nm und 500 nm liegt und diejenige ($l_{ar}$) des Resonanzrings (20) zwischen 400 nm und 800 nm liegt.

11. Vorrichtung (1) nach einem beliebigen der Ansprüche 1 bis 10, wobei die Materialien des Resonanzrings (20) und des Übergangsleiters (30) von einem Mantel aus Siliziumoxid umgeben sind.

12. Verfahren zur Erzeugung eines Frequenzkamms durch eine optoelektronische Vorrichtung (1) nach einem der vorhergehenden Ansprüche, umfassend die folgenden Schritte:

a) Emittieren, durch die Laserquelle (2), eines monochromatischen und kontinuierlichen Pumpsignals mit einer zeitlich konstanten Pumpwellenlänge ($\lambda_p$), wobei die Pumpwellenlänge ($\lambda_p$) ausgewählt wird, um in dem Resonanzring (20) eine optische Mode mit der Resonanzwellenlänge (Ares) zu bilden;

b) Polarisieren des Halbleiterübergangs durch eine Spannung (U) ungleich null, um eine Veränderung der Konzentration der Ladungsträger innerhalb des Übergangsleiters (30) zu verursachen, die zu einer Veränderung des effektiven Indexes der in dem Resonanzring (20) vorhandenen optischen Mode und somit der Resonanzwellenlänge (Ares) führt;

c) Detektieren eines optischen Signals an dem Ausgang (12) und Bestimmen, basierend auf dem detektierten optischen Signal, eines Werts eines Parameters, der für einen spektralen Abgleich zwischen dem Pumpsignal und der optischen Mode des Resonanzrings (20) repräsentativ ist;

d) Verändern des Werts (U) der Polarisationsspannung, bis der bestimmte Wert des repräsentativen Parameters einen Referenzwert erreicht, der für das Vorhandensein mindestens eines dissipativen zeitlichen Solitons in dem Resonanzring (20) repräsentativ ist.

13. Verfahren nach dem vorhergehenden Anspruch, wobei bei einem sogenannten Anfangswert ($U_{init}$) der Polarisationsspannung (U) die Pumpwellenlänge ($\lambda_p$) kleiner als die Resonanzwellenlänge (Ares) ist.

14. Verfahren nach dem vorhergehenden Anspruch, wobei in Schritt d) das Verändern des Werts (U) der Polarisationsspannung in Bezug auf den Anfangswert ($U_{init}$) eine Verringerung der Resonanzwellenlänge ($\lambda_{res}$) herbeiführt, bis diese kleiner als die Pumpwellenlänge ($\lambda_p$) ist.

15. Verfahren nach einem beliebigen der Ansprüche 12 bis 14, wobei der Wert einer optischen Übertragung des optischen Mikroresonators (3) bestimmt wird, wobei der Referenzwert ein Minimalwert der optischen Übertragung ist, wenn der Wert (U) der Polarisationsspannung zunimmt.

**Claims**

1. Optoelectronic device (1) for generating a frequency comb, comprising:

- a laser source (2) adapted to emit a continuous and monochromatic optical signal of a time-constant pump wavelength ($\lambda_p$), said signal being called pump signal;
- a ring optical microresonator (3), comprising:

  - a waveguide (10), called coupling waveguide, comprising an input (11) optically coupled to the laser source (2), and an output (12) intended to supply the generated frequency comb;
  - a first ring waveguide (20), called the resonant ring, coupled optically to the coupling waveguide (10) to generate an optical mode in the resonant ring (20) at a resonance wavelength ($\lambda_{res}$), and formed in a third order optically non-linear material which exhibits a refractive index ($n_{ar}$) and transverse dimensions ($l_{ar}$, $e_{ar}$) such that the resonant ring (20) exhibits an abnormal dispersion regime associated with said optical mode;

- a spectral tuning device (4) adapted to tune the resonance wavelength ($\lambda_{res}$) relative to the pump wavelength ($\lambda_p$) to form at least one dissipative temporal soliton in the resonant ring, comprising:

  - a second ring waveguide (30), called junction guide, arranged facing the resonant ring (20) so as to be longitudinally coupled optically along its longitudinal axis to the latter, formed in a material whose refractive index ($n_{gj}$) exhibits a deviation with respect to that ($n_{ar}$) of the core material of the resonant ring allowing the modal coupling between the two waveguides (20, 30), and comprising a semiconductor junction extending along its longitudinal axis locally parallel to that of the resonant ring (20);
  - electrical biasing means (40) adapted to apply a semiconductor junction biasing voltage (U);
  - a control unit (42), connected to the biasing means (40) and coupled optically to the output (12), adapted to modify the value of the voltage (U) to cause a modification of an effective index of the optical mode and therefore of the resonance wavelength ($\lambda_{res}$), until at least one dissipative temporal soliton is formed in the resonant ring (20).

2. Device (1) according to Claim 1, in which the control unit (42) is adapted to detect an optical signal at the output (12), to determine a value of a parameter thereof that is representative of a spectral tuning between the pump signal and an optical mode of the resonant ring (20) at the value of the voltage (U) applied, and to induce a modification of the value of said voltage (U) applied until the value of said parameter reaches a reference value representative of the presence of at least one dissipative temporal soliton in the resonant ring (20).

3. Device (1) according to Claim 1 or 2, in which the material of the junction guide (30) is silicon.

4. Device (1) according to any one of Claims 1 to 3, in which the material of the resonant ring (20) is a III-V semiconductor compound, a IV element or a IV compound.

5. Device (1) according to any one of Claims 1 to 4, in which the material of the resonant ring (20) is chosen from AlGaAs, GaAs, GaAsP, InGaP, InGaAsP, InGaAs.

6. Device (1) according to any one of Claims 1 to 5, in which the resonant ring (20) is single-mode at the resonance wavelength (Ares).

7. Device (1) according to any one of Claims 1 to 6, in which the difference between the refractive indexes ($n_{ar}$, $n_{gj}$) of the resonant ring (20) and of the junction guide (30) is less than or equal to 0.5.

8. Device (1) according to any one of Claims 1 to 7, in which a mean distance (d) separating the resonant ring (20) and the junction guide (30), along an axis orthogonal to the plane on which the resonant ring (20) extends, lies between 75 nm and 200 nm.

9. Device (1) according to any one of Claims 1 to 8, in which a mean width ($l_{gj}$) of the junction guide (30) is less than that ($l_{ar}$) of the resonant ring (20).

10. Device (1) according to Claim 9, in which the mean width ($l_{gj}$) of the junction guide (30) lies between 200 nm and 500 nm and that ($l_{ar}$) of the resonant ring (20) lies between 400 nm and 800 nm.

11. Device (1) according to any one of Claims 1 to 10, in which the materials of the resonant ring (20) and of the junction guide (30) are surrounded by a silicon oxide cladding.

12. Method for generating a frequency comb by an optoelectronic device (1) according to any one of the preceding claims, comprising the following steps:

   a) emission by the laser source (2) of a monochromatic and continuous pump signal at a time-constant pump wavelength ($\lambda_p$), said pump wavelength ($\lambda_p$) being chosen to form an optical mode in the resonant ring (20) at the resonance wavelength (Ares);

b) biasing of the semiconductor junction by a non-zero voltage (U), so as to provoke a modification of the concentration of the charge carriers within the junction guide (30), reflected by a modification of the effective index of the optical mode present in the resonant ring (20) and therefore of the resonance wavelength ($\lambda_{res}$);

c) detection of an optical signal at the output (12), and determination, from the optical signal detected, of a value of a parameter representative of a spectral tuning between the pump signal and the optical mode of the resonant ring (20);

d) modification of the value (U) of the biasing voltage, until the determined value of said representative parameter reaches a reference value representative of the presence of at least one dissipative temporal soliton in the resonant ring (20).

13. Method according to the preceding claim, in which, at an initial value ($U_{init}$) of the biasing voltage (U), the pump wavelength ($\lambda_p$) is less than the resonance wavelength (Ares).

14. Method according to the preceding claim, in which, in the step d), the modification of the value (U) of the biasing voltage relative to the initial value ($U_{init}$) leads to a reduction of the resonance wavelength ($\lambda_{res}$) until it is less than the pump wavelength ($\lambda_p$).

15. Method according to any one of Claims 12 to 14, in which the value of an optical transmission of the optical microresonator (3) is determined, the reference value being a minimum value of the optical transmission when the value (U) of the biasing voltage increases.

**Fig.1A**

**Fig.1B**

**Fig.1C**

**Fig.1D**

**Fig.2A**

**Fig.2B**

Fig.3A

Fig.3B

Fig.3C

**Fig.4A**

**Fig.4B**

**Fig.4C**

**Fig.5A**

**Fig.5B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LEVY et al.** intitulée CMOS-compatible multiple-wavelength oscillator for on-chip optical interconnects. *Nature Photon.,* 2010, vol. 4, 37-40
- **HERR et al.** intitulée Temporal solitons in optical microresonators. *Nature Photon.,* 2014, vol. 8, 145-152
- **SOLTANI et al.** intitulé Enabling arbitrary wavelength frequency combs on chip. *Laser Photonics Rev.,* 2016, vol. 10 (1), 158-162
- **JUNG et al.** intitulé Electrical tuning and switching of an optical frequency comb generated in aluminum nitride microring resonators. *Optics Letters,* 2014, vol. 39 (1), 84-87
- **XUE et al.** intitulé Thermal tuning of Kerr frequency combs in silicon nitride microring resonators. *Optics Express,* 2016, vol. 24 (1), 687-698
- **ZHANG et al.** intitulé Mid-infrared frequency comb generation in coupled silicon microring resonators. *Optics Communications,* 2014, vol. 332, 125-131
- **KORDTS et al.** intitulée High order mode suppression in high-Q anomalous dispersion SiN microresonators for temporal dissipative Kerr soliton formation. *Opt. Lett.,* 2016, vol. 41, 452
- **REED et al.** intitulée Silicon optical modulators. *Nature photonics,* 2010, vol. 4, 518-526